(19) Europäisches Patentamt
European Patent Office
Office européen des brevets

(11) EP 4 742 047 A1

(12) **EUROPEAN PATENT APPLICATION**
published in accordance with Art. 153(4) EPC

(43) Date of publication:
13.05.2026 Bulletin 2026/20

(21) Application number: 24881213.3

(22) Date of filing: 16.08.2024

(51) International Patent Classification (IPC):
*G06F 12/084* (2016.01)

(52) Cooperative Patent Classification (CPC):
G06F 12/084; G06F 12/0842; Y02D 10/00

(86) International application number:
PCT/CN2024/112910

(87) International publication number:
WO 2025/086845 (01.05.2025 Gazette 2025/18)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 25.10.2023 CN 202311399261

(71) Applicant: Honor Device Co., Ltd.
Shenzhen, Guangdong 518040 (CN)

(72) Inventors:
• MU, Zhenguo
Shenzhen, Guangdong 518040 (CN)
• ZHANG, Shichu
Shenzhen, Guangdong 518040 (CN)
• XIAO, Jun
Shenzhen, Guangdong 518040 (CN)

(74) Representative: MERH-IP Matias Erny Reichl
Hoffmann
Patentanwälte PartG mbB
Paul-Heyse-Straße 29
80336 München (DE)

(54) **METHOD FOR MANAGING SHARED CACHE, AND ELECTRONIC DEVICE**

(57) This application provides a shared cache management method and an electronic device, and relates to the field of electronic device control technologies. The method may match a processor and a running frequency of a shared cache, so that the processor can obtain data from the shared cache in a timely manner, thereby ensuring a running speed of an application. The method includes: setting, in response to a first event, the running frequency of the shared cache to a first frequency based on a focus application, user operation information, performance information of each processing core, and thread running information. The focus application is an application last operated by a user, the user operation information includes types and a quantity of operations performed by a user on the focus application in preset time, the performance information of each processing core is used to reflect a shared cache miss rate of the processing core, the thread running information is used to reflect running time proportions of a plurality of thread groups on each of N processing cores, and each thread group includes one or more threads running on the electronic device.

An electronic device determines a user scenario based on a focus application and user operation information — S401

The electronic device groups threads to obtain thread group information — S402

The electronic device obtains resource configuration information based on the user scenario — S403

The electronic device obtains system load — S404

The electronic device determines whether the system load is less than or equal to a load waterline — S405

Yes

The electronic device performs partitioning processing on a level 3 cache based on cache configuration information, to obtain mpam configuration information — S406

The electronic device obtains performance information of each processing core based on a first time interval — S407

The electronic device obtains thread running information — S408

The electronic device obtains, based on the user scenario, the cache configuration information, the performance information of each processing core, and the thread running information, a required level 3 cache frequency corresponding to each processing core — S409

The electronic device uses a maximum value in the required level 3 cache frequencies corresponding to all processing cores as a first frequency — S410

The electronic device manages the level 3 cache based on the mapm configuration information and the first frequency — S411

FIG. 4

EP 4 742 047 A1

**Description**

This application claims priority to Chinese Patent Application No. 202311399261.0, filed with the China National Intellectual Property Administration on October 25, 2023 and entitled "SHARED CACHE MANAGEMENT METHOD AND ELECTRONIC DEVICE", which is incorporated herein by reference in its entirety.

**TECHNICAL FIELD**

This application relates to the field of electronic device control technologies, and in particular, to a shared cache management method and an electronic device.

**BACKGROUND**

Cache sharing means that a plurality of entities (for example, a plurality of applications or a plurality of processing cores (core) of an electronic device) in a cache architecture share a cache resource to meet different cache requirements. For example, for a central processing unit (central processing unit, CPU) that includes a plurality of cores (core) in the electronic device, the plurality of cores share a level 3 cache (Level 3 Cache) of the CPU.

In a related technology, when a plurality of applications share a cache, to avoid cache contention, partitioning may be performed on the cache shared by the plurality of applications, so that different partitions are used to buffer to-be-buffered data of different applications. This method can equalize occupancy of the level 3 cache by different applications to a specific extent.

However, when actual occupancy of the level 3 cache by an application is sufficient, if a frequency of the level 3 cache does not match a frequency of the CPU, the CPU cannot obtain data from the level 3 cache in a timely manner, which affects a response speed of a foreground application, and further affects user experience.

**SUMMARY**

Embodiments of this application provide a shared cache management method and an electronic device, so that a CPU is enabled to obtain data from a shared cache in a timely manner.

To achieve the foregoing objective, the following technical solutions are used in the embodiments of this application.

According to a first aspect, a shared cache management method is provided and applied to an electronic device. The electronic device includes a processor, where the processor includes a shared cache and N processing cores, and N is an integer greater than or equal to 1. The method includes: receiving a first event used to trigger a focus application to change; and setting, in response to the first event, a running frequency of the shared cache to a first frequency based on the focus application, user operation information, performance information of each processing core, and thread running information. The focus application is an application last operated by a user, the user operation information includes types and a quantity of operations performed by the user on the focus application in preset time, the performance information of each processing core is used to reflect a shared cache miss rate of the processing core, the thread running information is used to reflect running time proportions of a plurality of thread groups on each of the N processing cores, and each thread group includes one or more threads running on the electronic device.

It may be understood that the focus application and the user operation information may be used to reflect a resource requirement of the focus application in a current user scenario. The running frequency of the shared cache is obtained based on the focus application, the user operation information, the thread running information, and the performance information of each processing core. Therefore, the obtained running frequency of the shared cache may match a running frequency of one or more processing cores and adapt to the current user scenario and a thread grouping situation, so that the one or more processing cores can obtain data or an instruction from the shared cache in a timely manner, thereby reducing impact caused to a running speed of a processing core due to a mismatch between a frequency of the shared cache and a running frequency of the processing core, increasing the running speed of the processing core, and further increasing a response speed of an application and improving user experience.

In an implementation provided in the first aspect, before the setting a running frequency of the shared cache to a first frequency based on the focus application, user operation information, performance information of each processing core, and thread running information, the method further includes: determining a user scenario based on the focus application and the user operation information; and determining resource configuration information based on the user scenario, where the resource configuration information includes space proportions of the plurality of thread groups in the shared cache. The setting a running frequency of the shared cache to a first frequency based on the focus application, user operation information, performance information of each processing core, and thread running information includes: setting the running frequency of the shared cache to the first frequency based on the user scenario, the resource configuration information, the performance information of each processing core, and the thread running information.

In an implementation provided in the first aspect, the setting the running frequency of the shared cache to the first frequency based on the user scenario, the resource configuration information, the performance information of each processing core, and the thread running information includes: obtaining, for the $i^{th}$ processing core in the N processing cores, a running frequency of the $i^{th}$ processing core based on the user scenario, the resource configuration information, performance information of the $i^{th}$ processing core, and running time proportions respectively of the plurality of thread groups on the $i^{th}$ processing core, where i=1~N; respectively obtaining, by querying first configuration information based on running frequencies of the N processing cores, required shared cache frequencies corresponding to the N processing cores, where a required shared cache frequency corresponding to the $i^{th}$ processing core is positively correlated with the running frequency of the $i^{th}$ processing core; using a maximum value in the required shared cache frequencies corresponding to the N processing cores as the first frequency; and setting the running frequency of the shared cache to the first frequency.

In an implementation provided in the first aspect, the performance information of the $i^{th}$ processing core further includes a clock cycle of the $i^{th}$ processing core. The plurality of thread groups include a first control group and a second control group. A correlation degree between a thread included in the first control group and user interaction experience is greater than a correlation degree between a thread included in the second control group and the user interaction experience, and there is no intersection set between the thread included in the first control group and the thread included in the second control group. The running frequency of the $i^{th}$ processing core is positively correlated with the clock cycle of the $i^{th}$ processing core, a space proportion of the first control group in the shared cache, and a running time proportion of the first control group on the $i^{th}$ processing core. The running frequency of the $i^{th}$ processing core is negatively correlated with a space proportion of the second control group in the shared cache and a running time proportion of the second control group on the $i^{th}$ processing core.

In an implementation provided in the first aspect, the running frequency of the $i^{th}$ processing core is further positively correlated with a shared cache miss rate of the $i^{th}$ processing core.

In an implementation provided in the first aspect, when the user scenario is a first user scenario, the running frequency of the $i^{th}$ processing core, the clock cycle of the $i^{th}$ processing core, the space proportion of the first control group in the shared cache, the space proportion of the second control group in the shared cache, the running time proportion of the first control group on the $i^{th}$ processing core, and the running time proportion of the second control group on the $i^{th}$ processing core meet the following:

$$Fcpu[i]=(cycle\_count[i]/sample\_ms)*Function1(P1,P2,Pt,x[i],y[i])$$

$$Function1(P1,P2,Pt,x[i],y[i])=C1*(1+P1/Pt)*(1+x[i])*(1-P2/Pt)*(1-y[i])$$

Fcpu[i] is the running frequency of the $i^{th}$ processing core, cycle_count[i] is the clock cycle of the $i^{th}$ processing core, sample_ms is a time interval for the electronic device to obtain performance information of the N processing cores, P1 is the space proportion of the first control group in the shared cache, P2 is the space proportion of the second control group in the shared cache, Pt is a sum of P1 and P2, x[i] is the running time proportion of the first control group on the $i^{th}$ processing core, y[i] is the running time proportion of the second control group on the $i^{th}$ processing core, and C1 is a preset first constant.

In an implementation provided in the first aspect, when the user scenario is a second user scenario, the running frequency of the $i^{th}$ processing core, the clock cycle of the $i^{th}$ processing core, the space proportion of the first control group in the shared cache, the space proportion of the second control group in the shared cache, the running time proportion of the first control group on the $i^{th}$ processing core, and the running time proportion of the second control group on the $i^{th}$ processing core meet the following:

$$Fcpu[i]=(cycle\_count[i]/sample\_ms)*Function2(P1,P2,Pt,x[i],y[i])$$

$$Function2(P1,P2,Pt,x[i],y[i])=C2*(1+P1/Pt)*(1+x[i])*(1+(ipm\_meas[i]-ipm\_ceil)/ipm\_meas[i])*(1-P2/Pt)*(1-y[i])$$

Fcpu[i] is the running frequency of the $i^{th}$ processing core, cycle_count[i] is the clock cycle of the $i^{th}$ processing core, sample_ms is a time interval for the electronic device to obtain performance information of the N processing cores, P1 is the space proportion of the first control group in the shared cache, P2 is the space proportion of the second control group in the shared cache, Pt is a sum of P1 and P2, x[i] is the running time proportion of the first control group on the $i^{th}$ processing core, y[i] is the running time proportion of the second control group on the $i^{th}$ processing core, ipm_meas[i] is the shared cache miss rate of the $i^{th}$ processing core, ipm_ceil is a preset miss rate waterline value, and C2 is a preset second constant.

In an implementation provided in the first aspect, the user scenario includes the first user scenario and the second user scenario. When the user scenario is the first user scenario, the space proportion of the first control group in the shared cache is a first space proportion, and the space proportion of the second control group in the shared cache is a second space proportion. When the user scenario is the second user scenario, the space proportion of the first control group in the shared cache is a third space proportion, and the space proportion of the second control group in the shared cache is a fourth space proportion. The first space proportion is less than the third space proportion, and the second space proportion is greater than the fourth space proportion.

In an implementation provided in the first aspect, the method further includes: in response to the first event, configuring cache partitions respectively of the plurality of thread groups in the shared cache based on the space proportions of the plurality of thread groups in the shared cache.

To be specific, compared with the conventional technology in which a cache partition of the shared cache is allocated to a thread group based on a fixed value, in this application, threads may be divided into the plurality of thread groups based on a correlation degree between each thread and the user interaction experience, a space proportion corresponding to each thread group in the shared cache may be determined based on the user scenario, and the cache partitions respectively of the plurality of thread groups in the shared cache may be configured based on the space proportions of the plurality of thread groups in the shared cache, so that different partitions are used to buffer to-be-buffered data of different thread groups. In this way, occupancy of the shared cache by a thread with a relatively high correlation degree with the user interaction experience may be ensured, thereby ensuring a response speed of the focus application.

In an implementation provided in the first aspect, the resource configuration information further includes a priority of using the shared cache by each of the plurality of thread groups, and the method further includes: configuring the plurality of thread groups based on the priority of using the shared cache by each thread group.

In this way, when a plurality of threads simultaneously initiate an access request to a level 3 cache, a cgroup to which a thread with a higher correlation degree with the user interaction experience belongs has sufficient space in the level 3 cache through division, so that a running frequency of the level 3 cache matches a running frequency of one or more processing cores. In addition, a thread that belongs to a cgroup with a higher priority of using the level 3 cache (that is, the thread with a higher correlation degree with the user interaction experience) is enabled to preferentially access the level 3 cache to obtain data, thereby ensuring a response speed of an application to which the thread with a higher correlation degree with the user interaction experience belongs, and improving user experience.

In an implementation provided in the first aspect, the thread running information further includes a shared cache miss rate of a first thread, the first thread is a thread with load ranking in top M, and M is a positive integer. The method further includes: adjusting a priority of a second thread in the first thread, so that the priority of the second thread is higher than a priority of another thread, different from the second thread, in a thread group to which the second thread belongs. The second thread is a thread whose shared cache miss rate is greater than a first threshold in the first thread.

In other words, in this application, a priority of using the shared cache may be further adjusted by using a thread as a granularity, so that a thread with a relatively high sharing cache miss rate and relatively high load preferentially accesses the shared cache, thereby reducing a shared cache miss rate of the thread.

In an implementation provided in the first aspect, the obtaining, for the $i^{th}$ processing core in the N processing cores, a running frequency of the $i^{th}$ processing core based on the user scenario, the resource configuration information, performance information of the $i^{th}$ processing core, and running time proportions respectively of the plurality of thread groups on the $i^{th}$ processing core includes: for the $i^{th}$ processing core in the N processing cores, if the shared cache miss rate of the $i^{th}$ processing core is less than or equal to a miss rate waterline value, obtaining the running frequency of the $i^{th}$ processing core based on the user scenario, the resource configuration information, the performance information of the $i^{th}$ processing core, and the running time proportions respectively of the plurality of thread groups on the $i^{th}$ processing core; or if the shared cache miss rate of the $i^{th}$ processing core is greater than the miss rate waterline value, determining the running frequency of the $i^{th}$ processing core based on a rated running frequency of the $i^{th}$ processing core.

In an implementation provided in the first aspect, the resource configuration information further includes a load waterline, and the method further includes: obtaining system load. The setting, in response to the first event, a running frequency of the shared cache to a first frequency based on the focus application, user operation information, performance information of each processing core, and thread running information includes: in response to the first event and the system load being less than or equal to the load waterline, configuring the cache partitions respectively of the plurality of thread groups in the shared cache, and setting the running frequency of the shared cache to the first frequency based on the focus application, the user operation information, the performance information of each processing core, and the thread running information.

In an implementation provided in the first aspect, the load waterline includes a first load waterline and a second load waterline. The first load waterline is a load waterline used when the user scenario is the first user scenario, and the second load waterline is a load waterline used when the user scenario is the second user scenario. The first load waterline is less than the second load waterline.

According to a second aspect, an electronic device is further provided in this application. The electronic device includes a storage and a processor. The processor includes a shared cache and N processing cores, and N is an integer greater than or equal to 1. The processor is coupled to the storage. The storage is configured to store a computer program code. The computer program code includes computer instructions. When the computer instructions are executed by the processor, the electronic device is enabled to perform the method according to the first aspect and any one of the implementations of the first aspect.

According to a third aspect, a computer-readable storage medium is further provided in this application, and includes computer instructions. When the computer instructions are run on an electronic device, the electronic device is enabled to perform the method according to the first aspect and any one of the implementations of the first aspect.

It may be understood that, for beneficial effects that can be achieved by the electronic device according to the second aspect and the computer-readable storage medium according to the third aspect, refer to the beneficial effects in the first aspect and any one of the possible implementations of the first aspect. Details are not described herein again.

## BRIEF DESCRIPTION OF DRAWINGS

FIG. 1 is a schematic diagram of a structure of a shared cache according to an embodiment of this application;
FIG. 2 is a diagram of a hardware structure of an electronic device according to an embodiment of this application;
FIG. 3 is a block diagram of a software structure of an electronic device according to an embodiment of this application;
FIG. 4 is a first schematic flowchart of a shared cache management method according to an embodiment of this application;
FIG. 5 is a schematic diagram of a hierarchy according to an embodiment of this application;
FIG. 6 is a schematic diagram of allocation of a cache partition according to an embodiment of this application; and
FIG. 7A and FIG. 7B are a second schematic flowchart of a shared cache management method according to an embodiment of this application.

## DESCRIPTION OF EMBODIMENTS

The following describes technical solutions in embodiments of this application with reference to accompanying drawings in the embodiments of this application. In description of the embodiments of this application, terms used in the following embodiments are merely intended to describe particular embodiments, and are not intended to limit this application. As used in this specification and the appended claims of this application, singular expressions "a", "the", "the foregoing", and "this" are also intended to include an expression such as "one or more", unless otherwise clearly specified in the context. It should be further understood that, in the following embodiments of this application, "at least one" and "one or more" mean one or at least two (including two). The term "and/or" is used to describe an association relationship between associated objects, and indicates that three relationships may exist. For example, "A and/or B" may represent the following cases: Only A exists, both A and B exist, and only B exists, where A and B may be singular or plural. The character "/" usually indicates an "or" relationship between associated objects.

As described in this specification, referring to "one embodiment", "some embodiments", or the like means that one or more embodiments of this application include particular features, structures, or characteristics described with reference to the embodiment. Therefore, statements such as "in one embodiment", "in some embodiments", or "in some other embodiments" that appear in different parts of this specification do not necessarily refer to same embodiments, but mean "one or more but not all embodiments", unless otherwise specifically emphasized in other manners. The terms "include", "comprise", "have", and variants thereof all mean "include but are not limited to", unless otherwise specially emphasized in other manners. The term "connection" includes a direct connection and an indirect connection, unless otherwise specified. The terms "first" and "second" are used for descriptive purposes only and should not be construed as indicating or implying relative importance or implicitly indicating a quantity of indicated technical features.

In the embodiments of this application, words such as "example" or "for example" are used to represent giving an example, an illustration, or a description. Any embodiment or design solution described as "example" or "for example" in the embodiments of this application should not be construed as being more preferred or advantageous than other embodiments or design solutions. Exactly, use of the words such as "example" or "for example" is intended to present a related concept in a specific manner.

To understand the embodiments of this application more clearly, the following describes some terms or technologies in the embodiments of this application.

### 1. Cache (cache)

A cache refers to a storage that can perform high-speed data exchange. When sending a data access request, a CPU first checks whether requested data exists in the cache. If the requested data exists in the cache (referred to as a hit), the data is directly returned to the CPU without access to a memory. If the requested data does not exist in the cache (referred to as a miss (miss)), the data is read from a memory with a relatively small rate and sent to the CPU for processing, and a data block in which the data is located is transferred to the cache, so that the CPU can directly read the data from the cache next time. In other words, the cache may exchange data with the CPU in preference to the memory, thereby reducing time used by the CPU to read the data.

The memory, also referred to as a main memory, is storage space that the CPU can directly address. In an example, the memory may be a dynamic random access memory (dynamic random access memory, DRAM) or the like, but is not limited thereto.

Data stored in the cache is usually data recently accessed by the CPU, or data assessed by the CPU at a relatively high frequency. In this way, a hit rate of reading data by the CPU can be increased, and performance of the CPU can be enhanced.

With development of a multi-core CPU, CPU caches may be usually divided into three levels: a level 1 cache (Level 1 Cache), a level 2 cache (Level 2 Cache), and a level 3 cache. A cache with a lower level is closer to the CPU, which indicates a larger computing speed and a smaller capacity of the cache.

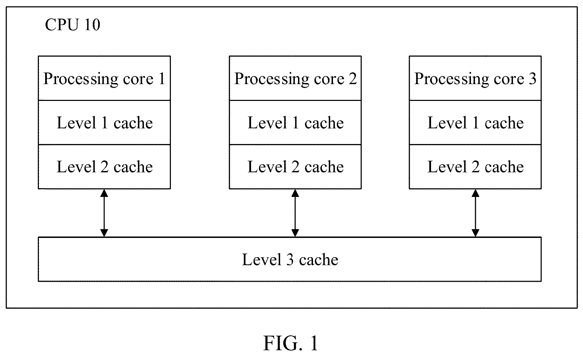

For example, FIG. 1 is a schematic diagram of a scenario of a shared cache. A CPU 10 of an electronic device includes three processing cores: a processing core 1, a processing core 2, and a processing core 3. Each of three processing cores of the CPU 10 is configured with an independent level 1 cache and level 2 cache, and all the three processing cores of the CPU 10 can access a level 3 cache of the CPU 10, that is, the level 3 cache of the CPU 10 is a shared cache of the three processing cores.

In a process of reading data, the processing core 1, the processing core 2, or the processing core 3 first searches for the data in the level 1 cache corresponding to the processing core. If the level 1 cache does not have the data required by the processing core (that is, a miss), the processing core proceeds to a next level, that is, searches for the data in the level 2 cache corresponding to the processing core. If the level 2 cache does not have the data required by the processing core (that is, a miss), the processing core proceeds to a next level, that is, searches for the data in the shared level 3 cache. The processing core searches for the data in a memory when the level 3 cache does not have the data required by the processing core (that is, a miss).

### 2. Cache performance

Cache performance may be evaluated by a hit rate or a miss rate.

In a scenario of reading data, the hit rate is a ratio of a quantity of read hits of an IO read request in a cache in a period of time to a quantity of all IO read requests in the period of time, and the miss rate is a ratio of a quantity of times of occurrence of a cache miss of an IO read request in the cache in a period of time to a quantity of all IO read requests in the period of time. A shared cache miss rate is a ratio of a quantity of times of occurrence of a cache miss of a read IO request in a shared cache to a quantity of all IO read requests in the shared cache in the period of time.

### 3. Control group (control groups, cgroup)

A cgroup manages and controls, in a form of a group, a behavior of using a system resource by a thread (process or application). To be specific, an electronic device may group all threads by using the cgroup, and then allocate and control resources for groups as a whole. The system resource may include the foregoing shared cache.

In a related technology, when a plurality of applications share a cache, to avoid cache contention, partitioning may be performed on the cache shared by the plurality of applications, so that different partitions are used to buffer to-be-buffered data of different applications. This method can equalize occupancy of a level 3 cache by different applications to a specific extent. However, considering that occupancy of the level 3 cache by a foreground application is sufficient, if a frequency of the level 3 cache does not match a frequency of a CPU, the CPU cannot obtain data from the level 3 cache in a timely manner, which affects a response speed of an application, and further affects user experience.

Therefore, in the shared cache management method provided in this application, a running frequency (that is, a first frequency) of a shared cache (for example, a level 3 cache) may be determined based on a focus application, user operation information, performance information of each processing core, and thread running information. The focus application is an application last operated by a user, the user operation information includes types and a quantity of operations performed by the user on the focus application in preset time, the performance information of each processing core is used to reflect a shared cache miss rate of the processing core, and the thread running information is used to reflect running statuses respectively of a plurality of thread groups (which may also be referred to as control groups) on one or more processing cores.

It may be understood that the focus application and the user operation information may be used to reflect a resource requirement of the focus application in a current user scenario. The running frequency of the shared cache is obtained based on the focus application, the user operation information, the thread running information, and the performance information of each processing core. Therefore, the obtained running frequency of the shared cache may match a running frequency of one or more processing cores and adapt to the current user scenario and a thread grouping situation, so that the one or more processing cores can obtain data or an instruction from the shared cache in a timely manner, thereby reducing impact caused to a running speed of a processing core due to a mismatch between a frequency of the shared cache and a running frequency of the processing core, increasing the running speed of the processing core, and further increasing a response speed of an application and improving user experience.

Considering that when cache partitions are currently divided in the shared cache, a size of a partition is usually manually specified, actual occupancy of the shared cache by a foreground application cannot be ensured, which affects a response speed of the foreground application.

In the shared cache management method provided in the embodiments of this application, threads may be further divided into a plurality of thread groups (or control groups) based on a correlation degree between each thread and user interaction experience. A space proportion corresponding to each thread group in the shared cache (that is, a level 3 cache) is determined based on a user scenario. Then, cache partitions respectively of the plurality of thread groups in the shared cache are configured based on space proportions of the plurality of thread groups in the shared cache, so that different partitions are used to buffer to-be-buffered data of different thread groups. Therefore, occupancy of the shared cache by a thread with a relatively high correlation degree with the user interaction experience (for example, a thread of the focus application) may be ensured, thereby ensuring a response speed of the focus application.

It should be noted that an example in which a shared cache is a level 3 cache and a control group refers to a thread group is used below for detailed description of a related method and an electronic device provided in this application.

It should be further noted that the electronic device provided in the embodiments of this application may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart household device, and/or a smart urban device. A specific type of the electronic device is not specially limited in the embodiments of this application.

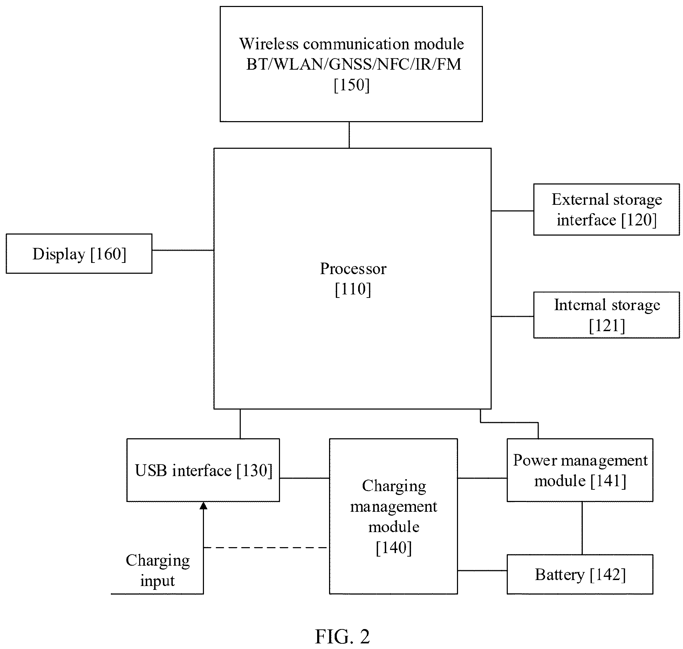

FIG. 2 is a diagram of a hardware structure of an electronic device 100 according to an embodiment of this application. As shown in FIG. 2, the electronic device 100 may include a processor 110, an external storage interface 120, an internal storage 121, a universal serial bus (universal serial bus, USB) interface 130, a charging management module 140, a power management module 141, a battery 142, a wireless communication module 150, a display 160, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors. The processor 110 may be a nerve center and a command center of the electronic device 100. The processor 110 may generate an operation control signal based on instruction operation code and a timing signal, to complete control of instruction fetching and instruction execution.

In an implementation, the processor 110 may be the CPU 10 shown in FIG. 1, and the processor 10 includes one or more processing cores. Based on performance of a performance core, processing cores may be divided into a performance core, a mid-tier core, and an efficiency core. In addition, the performance core usually has a higher frequency and higher performance, and is used to process a high-load task, for example, running a large application and a game with a high-graphics requirement. The efficiency core has low power consumption and high efficiency, and is used to process a low-load task, for example, browsing a web page or answering a phone call. The mid-tier core is between the performance core and the efficiency core.

A storage may be further disposed in the processor 110 to store instructions and data. In some embodiments, the storage in the processor 110 is a cache storage, that is, a cache. The storage may store instructions or data recently used or cyclically used by the processor 110. If the processor 110 needs to use the instructions or the data again, the processor 110 may directly invoke the instructions or the data from the storage. This avoids repeated access and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/-transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules illustrated in this embodiment is merely an example for description, and does not constitute a limitation on the structure of the electronic device 100. In some other embodiments, the electronic device 100 may alternatively use an interface connection manner different from that in the foregoing embodiment, or use a combination of a plurality of interface connection manners.

The external storage interface 120 may be configured to be connected to an external storage card, for example, a Micro SD card, to expand a storage capability of the electronic device 100. The external storage card communicates with the processor 110 through the external storage interface 120, to implement a data storage function. For example, files such as music and videos are stored in the external storage card.

The internal storage 121 may be configured to store a computer-executable program code, and the executable program code includes instructions. The processor 110 runs the instructions stored in the internal storage 121, to perform various function applications and data processing of the electronic device 100. For example, in an embodiment of this application, the processor 110 may execute the instructions stored in the internal storage 121, and the internal storage 121 may include a program storage area and a data storage area.

The program storage area may store an operating system and an application required by at least one function (for example, a recent task management function), and the like. The data storage area may store data created during use of the electronic device 100. In addition, the internal storage 121 may include a high-speed random access memory, and may further include a nonvolatile memory, for example, at least one magnetic disk storage device, a flash memory device, or a universal flash storage (universal flash storage, UFS). For example, in this embodiment of this application, the internal storage 121 includes an L3 register.

It may be understood that the structure shown in this embodiment does not constitute a specific limitation on the electronic device 100. In some other embodiments, the electronic device 100 may include more or fewer components than those shown in the figure, combine some components, split some components, or have different component arrangements. The components shown in the figure may be implemented by hardware, software, or a combination of software and hardware.

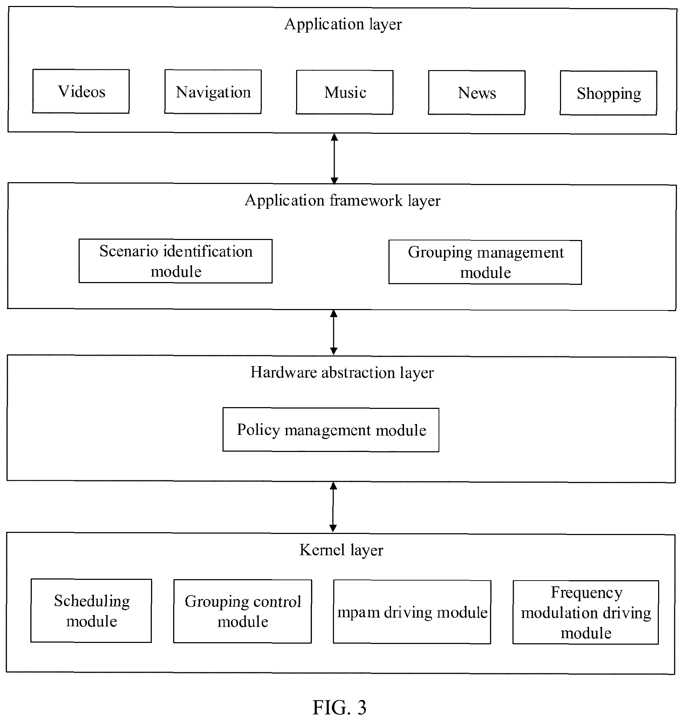

A software system of the electronic device 100 may use a layered architecture, an event-driven architecture, a microkernel architecture, a microservice architecture, or a cloud architecture. In the embodiments of the present invention, an Android™ system with the layered architecture is used as an example to describe a software structure of the electronic device 100. FIG. 3 is a block diagram of a software structure of the electronic device 100 according to an embodiment of this application.

In a layered architecture, software is divided into several layers, and each layer has a clear role and task. The layers communicate with each other through software interfaces. In some embodiments, the electronic device 100 may include an application layer, an application framework layer, a hardware abstraction layer (hardware abstraction layer, HAL), and a kernel layer. In addition, in different operating systems (for example, an Android™ system and an IOS™ system), the solutions of this application can still be implemented provided that functions implemented by functional modules are similar to those in the embodiments of this application.

The application layer may include a series of applications. As shown in FIG. 3, the application layer may include applications such as Videos, Navigation. Music, News, and Shopping.

The application framework layer provides an application programming interface (application programming interface, API) and a programming framework for an application at the application layer. The application framework layer includes some predefined functions. For example, as shown in FIG. 3, the application framework layer may include a scenario identification module and a grouping management module.

The scenario identification module is configured to obtain a focus application and user operation information, and determine a user scenario in which the electronic device 100 is located. For a specific process in which the scenario identification module determines the user scenario in which the electronic device 100 is located, refer to descriptions in the following S401 and S701. Details are not temporarily described herein.

The grouping management module is configured to divide threads into different control groups (thread groups) based on a correlation degree between a thread and user interaction experience.

The HAL layer is a package for a Linux kernel driver, provides an interface to an upper layer, and shields implementation details of underlying hardware. In this embodiment of this application, the HAL layer includes a policy management module. The policy management module is configured to obtain resource configuration information based on the user scenario and thread group information. The resource configuration information includes information such as a load waterline, a space proportion of each cgroup in a level 3 cache, and a priority of using the shared level 3 cache by each cgroup.

The kernel layer is a layer between hardware and software. The kernel layer includes at least a scheduling module, a grouping control module, a memory system resource partitioning and monitoring (memory system resource partitioning and monitoring, MPAM) driving module, and a frequency modulation driving module.

The scheduling module is configured to obtain actual load of the electronic device 100, load of a thread, running statuses of a related thread on different processing cores, and the like.

The grouping control module is configured to perform partitioning processing and the like on the level 3 cache based on a plurality of control groups obtained by the grouping management module and the resource configuration information.

The MPAM driving module may use an MPAM function to partition and monitor the level 3 cache. The MPAM can perform resource division on a cache from a hardware perspective, to resolve a problem of critical service performance degradation or overall system performance degradation caused by shared resource contention during a process in which a CPU access a memory.

The frequency modulation driving module is configured to determine a running frequency that is of the level 3 cache and that matches a running frequency of one or more processing cores.

It should be further noted that the software architecture shown in FIG. 3 shows only some layers, and an operating system may further include more layers than those shown in FIG. 3. This is not specifically limited herein.

The shared cache management method provided in the embodiments of this application may be applied to a scenario in which an application is started, a scenario in which a foreground application interacts with a user, and the like. In the scenario in which the application is started or the scenario in which the foreground application interacts with the user, the application requires a large quantity of cache resources. In this case, through the shared cache management method provided in this application, it can be effectively ensured that the foreground application has sufficient occupancy in the level 3 cache, to ensure that the foreground application can quickly start or quickly respond to a user operation, thereby improving user experience. The following describes in detail the shared cache management method provided in the embodiments of this application with reference to the accompanying drawings.

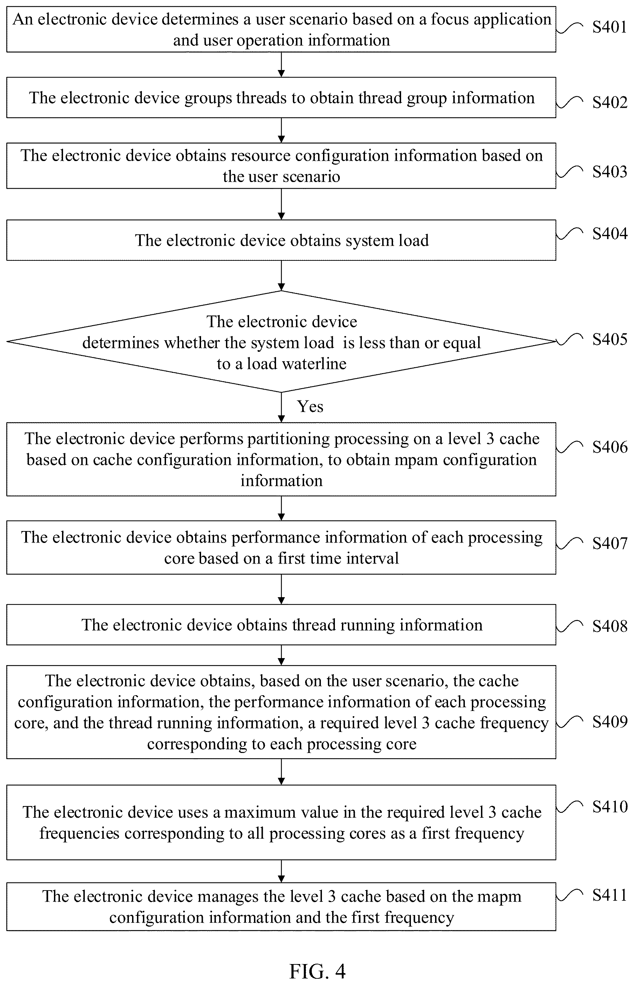

FIG. 4 is a first schematic flowchart of a shared cache management method according to an embodiment of this application. The method may be applied to the electronic device shown in FIG. 2. As shown in FIG. 4, the shared cache management method includes S401~S411.

S401: The electronic device determines a user scenario based on a focus application and user operation information.

In this embodiment of this application, the user scenario may be used to reflect a resource requirement of an application. The resource requirement of the application includes a requirement of the application for a cache resource, a CPU resource, a GPU resource, and the like. This is not specifically limited herein. In the embodiment of this application, based the focus application and the user operation information, the user scenario may include a video play scenario, a sliding scenario, and the like. In different user scenarios, the application has different requirements for a resource.

For example, in the video play scenario, there is less interaction between a user and the electronic device, and a CPU of the electronic device does not need to frequently read data from a cache. In this case, the application requires less cache.

For another example, in the sliding scenario, there is more interaction between the user and the electronic device, and the electronic device may update content on a page in response to a sliding operation of the user. During this period, the CPU of the electronic device may need to frequently read data from the cache, to update the content on the page. In this case, the application requires more cache space.

The focus application is an application last operated by the user. For example, if a most recent input received by a mobile phone acts on a chat application, the focus application is the chat application; or if the most recent input received by the user acts on a navigation application, the focus application is the navigation application.

It may be understood that, based on the focus application, a subsequent behavior of the user and a resource requirement of the focus application may be preliminarily predicted. For example, if the focus application is a video application, it may be inferred that the user has a requirement of watching a video. Therefore, it may be determined that the application may need a specific cache resource to buffer the video, and need to perform decoding by using a GPU resource. For another example, if the focus application is a short video application, it may be inferred that the user is very likely to watch a short video, and based on a characteristic that a user of the short video application needs to frequently slide a page to refresh the short video, it may be preliminarily determined that the application may need a large quantity of cache resources to buffer the short video, and need to perform decoding by using the GPU resource.

However, actually, a same application may have different use scenarios, and resource requirements in different use scenarios are also different. For example, when the focus application is the video application, the user may watch a specific video resource, or only browse a page of the video application and select a to-be-played video resource. When the user watches a specific video resource, there is less interaction between the user and the electronic device, and a processor of the electronic device does not need to frequently read data from the cache. In this case, the application requires fewer cache resources. When the user only browses a page of the video application, the electronic device may update content on the page in response to a sliding operation of the user. During this period, the processor of the electronic device may need to frequently read data from the cache, to update the content on the page. In this case, the application requires more cache resources.

Therefore, in this application, the user scenario is determined based on a combination of the focus application and the user operation information. The user operation information may include types and a quantity of operations performed by the user on the current focus application in preset time. The operation performed on the focus application may be a tap operation, a sliding operation, or the like.

For example, when the focus application is the video application, and the user operation information indicates that the user frequently performs the sliding operation on the video application, it indicates that the user probably needs to browse and select a to-be-played video resource in the video application, and the video application has not played the video, and therefore, it may be determined that the user scenario is the sliding scenario. In an optional implementation, when a quantity of sliding operations performed by the user on the video application exceeds a threshold 1, the user operation information indicates that the user frequently performs the sliding operation on the video application.

For another example, when the focus application is the video application, and the user operation information indicates that the user only performs fewer operations on the video application, it indicates that the user probably is watching a video, and performs less interaction with the video application during this period, and therefore, it may be determined that the user scenario is the video play scenario. In an optional implementation, when a quantity of operations performed by the user on the video application is less than a threshold 2, the user operation information indicates that the user only performs fewer operations on the video application.

It may be learned that the user scenario is comprehensively determined based on a combination of the focus application and the user operation information, so that the resource requirement of the application can be predicted more accurately. This helps accurately perform resource scheduling subsequently, thereby rapidly meeting a user requirement and improving user experience.

In some embodiments, the electronic device may perceive a change in the focus application by using a process manager, and when perceiving that the focus application changes, the electronic device determines a user scenario based on a current focus application and user operation information, so that the electronic device adjusts a resource configuration policy again when the focus application changes.

S402: The electronic device groups threads to obtain thread group information.

The thread group information includes a plurality of cgroups (which may also be referred to as thread groups) and a thread included in each cgroup.

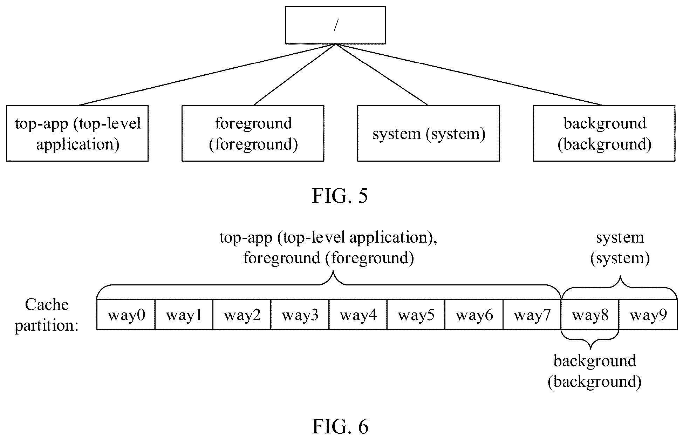

Specifically, each cgroup may include one or more threads, or may not include any thread. FIG. 5 is a schematic diagram of a hierarchy (hierarchy). The hierarchy may be understood as a cgroup tree with a hierarchy relationship, and each node of the tree is a cgroup. Referring to FIG. 5, for example, the thread tree includes a top-app (top-level application) group, a foreground (foreground) group, a system (system) group, and a background (background) group. It should be noted that a quantity and a name of each cgroup shown in this application are only examples. This is not limited in this application.

In this embodiment of this application, the electronic device may divide threads into different cgroups based on a correlation degree between a thread and user interaction experience, so that a scheduling policy corresponding to a cgroup to which the thread belongs is executed on the thread. In an optional implementation, the electronic device may determine a correlation degree between a thread and user interaction experience based on whether an application to which the thread belongs runs in a foreground or a background. A thread of an application running in the foreground has a higher correlation degree with the user interaction experience, and a thread of an application running in the background has a lower correlation degree with the user interaction experience.

For example, the top-app group includes threads strongly related to the user interaction experience, such as a thread of the focus application, a thread of a foreground application, rendering thread (for example, a Render thread), and a thread (for example, a UI thread) of updating a user interface. The foreground group includes service threads related to the user interaction experience, such as an audio thread, a core framework thread, and a thread for application of a navigation bar or a status bar. The background group includes threads that are not strongly related to the user interaction experience, such as a thread of an application switched to the background and a thread of executing a download task in the background. The system group includes a system thread, a kernel thread, and a thread for application of battery power statistics. The foreground application may refer to an application that runs in the foreground but is not last operated by the user. For example, the electronic device may simultaneously display an interface of a video application and an interface of a chat application. However, if an application last operated by the user is the chat application, the focus application is the chat application, and the video application is the foreground application. The foregoing division manner is only an example, and this is not limited in this application.

S403: The electronic device obtains resource configuration information based on the user scenario.

The resource configuration information includes a load waterline and cache configuration information, and the cache configuration information includes a space proportion of each cgroup in a level 3 cache. The load waterline may be used as a parameter for the electronic device to determine whether to improve performance or reduce power consumption. The space proportion of each cgroup in the level 3 cache is a maximum proportion of space that the cgroup can use in the level 3 cache, and a proportion of space that each cgroup actually uses in the level 3 cache is not greater than the space proportion of the croup in the level 3 cache.

In an optional implementation, the electronic device pre-stores configuration information, and the configuration information includes a correspondence between different user scenarios and the resource configuration information. In this way, the electronic device may query, based on a user scenario, corresponding resource configuration information from the configuration information.

For example, the correspondence between the different user scenarios and the resource configuration information may be shown in Table 1.

**Table 1**

| User scenario | Space proportion in a level 3 cache | Load waterline |
|---|---|---|
| Video play scenario | top-app/foreground: 60%<br>background: 30%<br>system: 10% | 70% |
| Sliding scenario | top-app/foreground: 80%<br>background: 10%<br>system: 10% | 75% |
| ... | ... | ... |

For example, it may be learned based on Table 1 that, when the user scenario is the video play scenario, the electronic device may determine that the load waterline is 70%, the top-app group and the foreground group each may occupy 60% of space of the level 3 cache, the background group may occupy 30% of the space of the level 3 cache, and the system group may occupy 10% of the space of the level 3 cache.

It should be noted that Table 1 is only used to show the correspondence between the user scenario and the resource configuration information, but does not mean that the user scenario and the corresponding resource configuration information need to be stored in a form of a table. For example, the resource configuration information may alternatively be stored in a specified field that is corresponding to the user scenario and that is in a resource configuration file.

S404: The electronic device obtains system load.

The system load is a sum of load of all threads running on the electronic device.

S405: The electronic device determines whether the system load is less than or equal to the load waterline.

The electronic device may compare the system load and the load waterline to determine whether to improve performance or reduce power consumption, and further determine whether to manage a shared cache by using the foregoing resource configuration information.

It may be understood that, when the system load is greater than the load waterline, it indicates that current system load is relatively high. In this case, the electronic device needs to preferentially consider performance. Therefore, the electronic device does not manage the shared cache by using the foregoing resource configuration information, but takes a measure of rapidly improving a running frequency of the CPU to meet a high load requirement.

In an optional implementation, when the system load is greater than the load waterline, the electronic device sets the user scenario to a default scenario, and obtains corresponding resource configuration information in the default scenario. The corresponding resource configuration information in the default scenario may also include a space proportion of each control group in the level 3 cache. However, space proportions (for example, 50%) of the top-app group and the foreground group in the level 3 cache in the default scenario are less than the space proportions (for example, 60%) of the top-app group and the foreground group in the level 3 cache in the video play scenario, and a space proportion (for example, 40%) of the background group in the level 3 cache in the default scenario is greater than the space proportion (for example, 30%) of the background group in the level 3 cache in the video play scenario.

When the system load is less than or equal to the load waterline, it indicates that the current system load is moderate. In this case, the electronic device may balance performance and power consumption, and does need to rapidly improve the running frequency of the CPU. Therefore, the electronic device may manage the shared cache by using the foregoing resource configuration information, that is, performs S406.

In an optional implementation, the resource configuration information may not include the load waterline, and the electronic device may not perform S404 or S405, but directly performs S406.

S406: The electronic device performs partitioning processing on the level 3 cache based on the cache configuration information, to obtain MPAM configuration information.

The MPAM configuration information includes partition identifiers of a plurality of cache partitions and a cgroup corresponding to each cache partition. In this embodiment of this application, the electronic device may use an MPAM function to partition and monitor the level 3 cache. For example, the electronic device may divide the level 3 cache into a plurality of cache partitions, allocate a different partition identifier to each cache partition, and allocate a cache partition to each cgroup.

When allocating the cache partition to each cgroup, the electronic device may refer to the space proportion of each cgroup in the level 3 cache, to meet the space proportion of each cgroup in the level 3 cache.

For example, the electronic device may divide the L3 cache into 10 cache partitions, and partition identifiers of the 10 cache partitions are respectively way[j], where j=0~9. It should be noted that the 10 cache partitions does not need to be consecutive in terms of physical address. It may be learned from Table 1 that, when the user scenario is the sliding scenario, the space proportions of the top-app group and the foreground group in the level 3 cache are 80%, the space proportion of the background group in the level 3 cache is 10%, and the space proportion of the system group in the level 3 cache is 10%~20%. In this way, the electronic device may allocate cache partitions way0~way9 in a manner shown in FIG. 6.

It may be learned based on FIG. 6 that, the electronic device allocates eight cache partitions way0~way7 to the top-app group and the foreground group for use, so that 80% of the space of the level 3 cache is occupied in total; allocates the cache partition way8 to the background group for use, so that the background group occupies 10% of the space of the level 3 cache; and allocates two cache partitions way8~way9 to the system group for use, so that the system group occupies 20% of the space of the level 3 cache.

In this way, different cgroups can access cache partitions corresponding to the different cgroups, so that not only physical isolation between data is achieved, but also occupancy of the level 3 cache by each cgroup can be ensured, thereby reducing fluctuation of running time of a thread in each cgroup.

S407: The electronic device obtains performance information of each processing core based on a first time interval.

The performance information of each processing core may be monitored by using a performance monitoring unit (performance monitoring unit, PMU) of the electronic device.

In this embodiment of this application, the electronic device obtains the performance information of each processing core once every first time interval sample_ms. For example, if the first time interval sample_ms is 50 ms, the PMU obtains the performance information of each processing core once every 50 ms.

Performance information of a processing core includes cache_miss_count, that is, a quantity of times that the processing core misses the level 3 cache in the first time interval, instruction_count, that is, a quantity of instructions running in the first time interval, a clock cycle cycle_count, and a level 3 cache miss rate of the processing core. The clock cycle of the processing core may be time required by the processing core to run one instruction.

An example in which the electronic device includes N processing cores is used. The electronic device may obtain cache_miss_count[i], instruction_count[i], and cycle_count[i], where i=1~N, cache_miss_count[i] represents a quantity of times that the $i^{th}$ processing core misses the level 3 cache in the first time interval, instruction_count[i] represents a quantity of instructions running by the $i^{th}$ processing core in the first time interval, and cycle_count[i] represents a clock cycle of the $i^{th}$ processing core.

For example, if the first time interval is 100 ms and the electronic device includes four processing cores, the electronic device obtains, every 100 ms, a quantity of times that each of the four processing cores misses the level 3 cache in 100 ms, a quantity of instructions running by each of the four processing cores in 100 ms, and a clock cycle of each of the four processing cores.

In this way, the electronic device may determine a level 3 cache miss rate ipm_meas[i] of the $i^{th}$ processing core based on cache_miss_count[i] and instruction_count[i], where cache_miss_count[i], instruction_count[i], and ipm_meas[i] meet the following formula: ipm_meas[i]=instruction_count[i]/cache_miss_count[i], where i=1~N.

S408: The electronic device obtains thread running information.

The thread running information includes running time proportions respectively of a key thread group and a non-key thread group on each processing core.

In this embodiment of this application, the key thread group may include the top-app group and the foreground group, and the non-key thread group may include the background group. In an optional implementation, the key thread group may also be referred to as a first control group, and the non-key thread group may also be referred to as a second control group. There is no intersection set between a thread included in the first control group and a thread included in the second control group.

The example in which the electronic device includes the N processing cores is still used. The electronic device may obtain a first running time proportion x[i] and a second running time proportion y[i]. The first running time proportion x[i] is used to represent a running time proportion of the key thread group on the $i^{th}$ processing core and the second running time proportion y[i] is used to represent a running time proportion of the non-key thread group on the $i^{th}$ processing core, where i=1~N.

It may be understood that, a processing core run by a thread in the key thread group/the non-key thread group may be determined by obtaining the running time proportions of the key thread group and the non-key thread group on each processing core. For example, a running time proportion of the key thread group on a performance core is greater than a running time proportion of the key thread group on another core, which indicates that most threads in the key thread group run on the performance core.

S409: The electronic device obtains, based on the user scenario, the cache configuration information, the performance information of each processing core, and the thread running information, a required level 3 cache frequency corresponding to each processing core.

The required level 3 cache frequency corresponding to each processing core is a running frequency that is of the level 3 cache and that matches the processing core. In different user scenarios, manners of obtaining the required level 3 cache frequency corresponding to each processing core are different. The video play scenario and the sliding scenario are used as an example below to respectively describe processes of obtaining, in different user scenarios, the required level 3 cache frequency corresponding to each processing core.

1. Video play scenario

When the user scenario is the video play scenario, for the $i^{th}$ processing core, the electronic device may first compare the level 3 cache miss rate ipm_meas[i] of the $i^{th}$ processing core and a miss rate waterline value ipm_ceil. The miss rate waterline value ipm_ceil is a preset value.

If the level 3 cache miss rate of the $i^{th}$ processing core is greater than the miss rate waterline value, that is, ipm_meas[i]>ipm_ceil, it indicates that the level 3 cache miss rate of the $i^{th}$ processing core is relatively low, that is, a current running frequency of the level 3 cache can already meet a running requirement of the $i^{th}$ processing core. Therefore, a frequency may be reduced to reduce power consumption. In this case, the electronic device may obtain a rated running frequency $F_{rated}[i]$ of the $i^{th}$ processing core. When the $i^{th}$ processing core includes a plurality of rated running frequencies $F_{rated}[i]$, the electronic device may use a minimum value in the plurality of rated running frequencies $F_{rated}[i]$ as a running frequency Fcpu[i] of the $i^{th}$ processing core, that is:

$$Fcpu[i]=\min\{F_{rated}[i]\}, \text{ where } i=1\text{\textasciitilde}N.$$

For example, if the rated running frequencies of the $i^{th}$ processing core include 2.5 GHz, 2.8 GHz, and 3.0 GHz, the electronic device may use 2.5 GHz, a minimum value in the rated running frequencies, as the running frequency of the $i^{th}$ processing core.

If the level 3 cache miss rate of the $i^{th}$ processing core is less than or equal to the miss rate waterline value, that is, ipm_meas[i]≤ipm_ceil, it indicates that the level 3 cache miss rate of the $i^{th}$ processing core is relatively high, and a current running frequency of the level 3 cache cannot meet a running requirement of the $i^{th}$ processing core. Therefore, the running frequency of the level 3 cache may be increased. In this case, the electronic device may determine, based on the following formula, the running frequency Fcpu[i] of the $i^{th}$ processing core, where the Fcpu[i] meets the following formulas:

$$Fcpu[i]=(cycle\_count[i]/sample\_ms)*Function1(P1,P2,Pt,x[i],y[i])$$

$$Function1(P1,P2,Pt,x[i],y[i])=C1*(1+P1/Pt)*(1+x[i])*(1-P2/Pt)*(1-y[i])$$

where cycle_count[i] is the clock cycle cycle_count[i] of the $i^{th}$ processing core, sample_ms is the first time interval, Function1 is a variable parameter, P1 is a space proportion of the key thread group (for example, the top-app group and the foreground group) in the level 3 cache, P2 is a space proportion of the non-key thread group (for example, the background group) in the level 3 cache, Pt is a sum of P1 and P2, x[i] is the running time proportion of the key thread group on the $i^{th}$ processing core, y[i] is the running time proportion of the non-key thread group on the i processing core, and C1 is a preset constant.

It may be learned that in the video play scenario, for any processing core, a longer clock cycle of the processing core indicates a higher space proportion (that is, P1) of the key thread group in the level 3 cache and a higher running time proportion (that is, x[i]) of the key thread group on the processing core. Alternatively, a lower space proportion (that is, P2) of the non-key thread group in the level 3 cache indicates a lower running time proportion (that is, y[i]) of the non-key thread group on the processing core and a higher running frequency of the processing core.

After determining the running frequency of the $i^{th}$ processing core, the electronic device may obtain, by querying first configuration information based on the running frequency of the $i^{th}$ processing core, a corresponding running frequency of the level 3 cache as a required level 3 cache frequency Fcache[i] corresponding to the $i^{th}$ processing core, where i=1~N. The first configuration information stores a correspondence between a running frequency of a processing core and a running frequency of the level 3 cache, and a higher running frequency of the processing core indicates a higher running frequency of the level 3 cache.

2. Sliding scenario

It should be noted that a process of obtaining, in the sliding scenario, the required level 3 cache frequency corresponding to each processing core is partially the same as the process of obtaining, in the video play scenario, the required level 3 cache frequency corresponding to each processing core. For a same part, refer to the foregoing description. Details are not described herein again.

When the user scenario is the sliding scenario, for the $i^{th}$ processing core, the electronic device may also first compare the level 3 cache miss rate ipm_meas[i] of the $i^{th}$ processing core and the miss rate waterline value ipm_ceil.

If the level 3 cache miss rate of the $i^{th}$ processing core is greater than the miss rate waterline value, that is, ipm_meas[i]>ipm_ceil, Fcpu[i]=min{F$_{rated}$[i]}.

If the level 3 cache miss rate of the $i^{th}$ processing core is less than or equal to the miss rate waterline value, that is, ipm_meas[i]≤ipm_ceil, the electronic device may determine, based on the following formula, the running frequency Fcpu[i] of the $i^{th}$ processing core, where Fcpu[i] meets the following formula:

$$Fcpu[i]=(cycle\_count[i]/sample\_ms)*Function2(P1,P2,Pt,x[i],y[i])$$

Function2(P1,P2,Pt,x[i],y[i])=C2*(1+P1/Pt)*(1+x[i])*(1+(ipm_meas[i]-ipm_ceil)/ip m_meas[i])*(1-P2/Pt)*(1-y[i]) where ipm_meas[i] is the level 3 cache miss rate of the $i^{th}$ processing core, and ipm_ceil is the miss rate waterline value.

It may be learned that in the sliding scenario, for any processing core, a longer clock cycle of the processing core indicates a higher space proportion of the key thread group in the level 3 cache and a higher running time proportion of the key thread group on the processing core. Alternatively, a lower running time proportion of the non-key thread group on the processing core indicates a lower space proportion of the non-key thread group in the level 3 cache, a lower level 3 cache miss rate of the processing core, and a higher running frequency of the processing core.

Similarly, after determining the running frequency of each processing core, the electronic device may search the first configuration information for a running frequency that is of the level 3 cache and that corresponds to the running frequency of the processing core, which is used as a required level 3 cache frequency corresponding to the processing core, that is, to obtain Fcache[i], where i=1~N.

It should be noted that in the foregoing description, when the system load is greater than the load waterline, the electronic device sets the user scenario to the default scenario, and obtains the corresponding resource configuration information in the default scenario. In the default scenario, the electronic device may also obtain the required level 3 cache frequency corresponding to each processing core. However, in the default scenario, the required level 3 cache frequency corresponding to each processing core has a low correlation degree with the cache configuration information, the performance information of each processing core, and the thread running information.

In the default scenario, for the $i^{th}$ processing core, the electronic device may first compare the level 3 cache miss rate ipm_meas[i] of the $i^{th}$ processing core and the miss rate waterline value ipm_ceil. The miss rate waterline value ipm_ceil is a preset value.

If the level 3 cache miss rate of the $i^{th}$ processing core is greater than the miss rate waterline value, that is, ipm_meas[i]>ipm_ceil, the electronic device may use a minimum value in a plurality of rated running frequencies F$_{rated}$[i] as the running frequency Fcpu[i] of the $i^{th}$ processing core, that is, Fcpu[i]=min{F$_{rated}$[i]}, where=1~N.

If the level 3 cache miss rate of the $i^{th}$ processing core is less than or equal to the miss rate waterline value, that is, ipm_meas[i]≤ipm_ceil, the electronic device may determine the running frequency Fcpu[i] of the $i^{th}$ processing core based on the clock cycle cycle_count[i] of the $i^{th}$ processing core and the first time interval sample_ms, where cycle_count[i], sample_ms, and Fcpu[i] meet the following formula: Fcpu[i]=cycle_count[i]/sample_ms.

It may be learned that for any processing core, a longer clock cycle of the processing core indicates a higher running frequency corresponding to the processing core.

Similarly, after determining the running frequency of each processing core, the electronic device may search the first configuration information for a running frequency that is of the level 3 cache and that corresponds to the running frequency of the processing core, which is used as a required level 3 cache frequency corresponding to the processing core, that is, to obtain Fcache[i], where i=1~N.

S410: The electronic device uses a maximum value in the required level 3 cache frequencies corresponding to all processing cores as a first frequency.

To be specific, the first frequency and the required level 3 cache frequencies corresponding to all the processing cores meet the following formula:

$$Fcache = \max\{Fcache[i]\}$$

Fcache is the first frequency. The first frequency may be used as the running frequency of the level 3 cache.

It may be understood that, the maximum value in the required level 3 cache frequencies corresponding to all the processing cores is used as the running frequency of the level 3 cache, so that requirements of all the processing cores for frequencies of the level 3 cache can be met, and all the processing cores can obtain data from the level 3 cache in a timely manner.

S411: The electronic device manages the level 3 cache based on the mapm configuration information and the first frequency.

In an implementation, the electronic device may write the mapm information and the first frequency into a register, so that the electronic device configures cache partitions respectively of a plurality of control groups in the level 3 cache based on space proportions of the plurality of control groups in the level 3 cache, and sets the first frequency to the running frequency of the level 3 cache.

It may be learned from the foregoing content that, in this application, threads may be divided into a plurality of cgroups based on a correlation degree between each thread and the user interaction experience, and space that is of the level 3 cache and that is applicable to a current user scenario is allocated to each control group. More space of the level 3 cache is allocated to a cgroup to which a thread with a higher correlation degree with the user interaction experience belongs, thereby ensuring a response speed of an application to which the thread with a higher correlation degree with the user interaction experience belongs, and helping to improve user experience.

In addition, the electronic device may further determine a running frequency of the level 3 cache based on the user scenario, the resource configuration information, the performance information of each processing core, and the thread running information. Therefore, the obtained running frequency of the level 3 cache may match a running frequency of one or more processing cores and adapt to the current user scenario and a thread grouping situation, so that the one or more processing cores can obtain data or an instruction from the level 3 cache in a timely manner, thereby reducing impact caused to a running speed of a processing core due to a mismatch between the running frequency of the level 3 cache and a running frequency of the processing core, increasing the running speed of the processing core, and further increasing a response speed of an application and improving user experience.

Considering that when more space of the level 3 cache is allocated to the cgroup to which the thread with a higher correlation degree with the user interaction experience belongs it cannot be ensured that the thread with a higher correlation degree with the user interaction experience can preferentially access the level 3 cache when resource contention exists.

Therefore, in an optional implementation, the resource configuration information may further include a priority of using the level 3 cache by each cgroup, an upper limit value and a lower limit value of the frequency of the level 3 cache. In this case, a correspondence between different user scenarios and the resource configuration information may be shown in Table 2.

**Table 2**

| User scenario | Space proportion in a level 3 cache | Priority of using the level 3 cache | Load waterline | Frequency range |
|---|---|---|---|---|
| Video play scenario | top-app/foreground: 60% background: 30% system: -1 | top-app/foreground: high system: medium background: low | 70% | min: f1 max: f2 |
| Sliding scenario | top-app/foreground: 80% background: 10% system: -1 | top-app/foreground: high system: medium background: low | 75% | min: f3 max: f4 |
| ... | ... | ... | ... | |

The space proportion of the system in the level 3 cache is -1, which indicates that the system group can occupy a level 3 cache of a cgroup whose priority of using the level 3 cache is lower than a priority of using the level 3 cache by the system group. In addition, a priority includes three levels: high, medium, and low. A priority of using the level 3 cache by a cgroup with a high priority is higher than a priority of using the level 3 cache by a cgroup with a medium or low priority. A priority of using the level 3 cache by a cgroup with a medium priority is higher than a priority of using the level 3 cache by a cgroup with a low priority. When threads that belong to different cgroups simultaneously initiate an access request to the level 3 cache, a thread that belongs to a cgroup with a higher priority can preferentially access the level 3 cache, so that the thread in the cgroup with a higher priority can obtain data with relatively high efficiency. In addition, f1<f3, and f2<f4.

It should be noted that the correspondence that is between the different user scenarios and the resource configuration information and that is shown in this application is only used as an example, and this is not limited in this application.

For example, it may be learned based on Table 2 that, when the user scenario is the video play scenario, the electronic device may determine that the load waterline is 70%; the lower limit value of the frequency of the level 3 cache is f1, and the upper limit value of the frequency of the level 3 cache is f2; the top-app group and the foreground group may occupy 60% of the space of the level 3 cache, and the background group may occupy 30% of the space of the level 3 cache; and the priority of using the level 3 cache by the top-app group and the foreground group is higher than the priority of using the level 3 cache by the system group, and the priority of using the level 3 cache by the system group is higher than the priority of using the level 3 cache by the background group. Because the space proportion of the system group in the level 3 cache is -1, it indicates that when a space proportion required by the system group in the level 3 cache is greater than 10%, the system group may occupy the level 3 cache of the background group, that is, the system group may occupy up to 40% of the space of the level 3 cache.

In addition, it may be learned based on Table 2 that, a cgroup to which a thread with a higher correlation degree with the user interaction experience belongs has a higher priority of using the level 3 cache.

It should be further noted that, after determining the maximum value in the required level 3 cache frequencies corresponding to all the processing cores as the first frequency, the electronic device may compare an upper limit value of the frequency of the level 3 cache in a current user scenario with the maximum value in the required level 3 cache frequencies corresponding to all the processing cores, and use a smaller value in the upper limit value and the maximum value as the first frequency.

In other words, the first frequency meets the following formula: Fcache=min{Fcache[i]max, fmax}.

Fcache is the first frequency, Fcache[i]max is the maximum value in the required level 3 cache frequencies corresponding to all the processing cores, and fmax is the upper limit value of the frequency of the level 3 cache in the current user scenario.

In this case, the electronic device may write the mapm configuration information, the first frequency, and the priority of using the level 3 cache by each cgroup into the register, to manage the level 3 cache.

In this way, when a plurality of threads simultaneously initiate an access request to the level 3 cache, a cgroup to which a thread with a higher correlation degree with the user interaction experience belongs has sufficient space in the level 3 cache through division, so that a running frequency of the level 3 cache matches a running frequency of one or more processing cores. In addition, a thread that belongs to a cgroup with a higher priority of using the level 3 cache (that is, the thread with a higher correlation degree with the user interaction experience) is enabled to preferentially access the level 3 cache to obtain data, thereby ensuring a response speed of an application to which the thread with a higher correlation degree with the user interaction experience belongs, and improving user experience.

In all of the foregoing methods, a cgroup is used as a granularity to adjust the priority of using the level 3 cache by the cgroup and the space proportion of the cgroup in the level 3 cache, and no adjustment is made to a thread.

Therefore, in an optional implementation, the thread running information further includes load of each thread. In this way, the electronic device may select a first thread from all threads. The first thread may be a thread with load ranking top, for example, a thread with load ranking in top M. M is a positive integer, for example, 3, 5, 10, or the like.

Further, the thread running information further includes cache_miss_count2, that is, a quantity of times that the first thread misses the level 3 cache in second time, and instruction_count2, that is, a quantity of instructions running by the first thread in the second time. The second time may be any time, for example, the foregoing first time interval or other time. This is not specifically limited herein.

For example, there are M first threads in the electronic device. The electronic device may obtain cache_miss_count2[k] and instruction_count2[k], where k=1~M, cache_miss_count2[k] represents a quantity of times that the $k^{th}$ first thread misses the level 3 cache in the second time, and instruction_count2[k] represents a quantity of instructions running by the $k^{th}$ first thread in the second time.

In this way, the electronic device may determine a level 3 cache miss rate ipm_meas2[k] of the $M^{th}$ first thread based on cache_miss_count2[k] and instruction_count2[k], where ipm_meas2[k], cache_miss_count2[k], and instruction_count2[k] meet the following formula:

$$ipm\_meas2[k]=instruction\_count2[k]/cache\_miss\_count2[k], \text{ where } k=1{\sim}M$$

Based on this, the electronic device may determine a first thread whose level 3 cache miss rate is greater than a threshold 3 as a second thread, and increase a priority of using the level 3 cache by the second thread.

In this embodiment of this application, increasing the priority of using the level 3 cache by the second thread may be understood as enabling the priority of using the level 3 cache by the second thread to be higher than a priority of using the level 3 cache by all other threads in a cgroup to which the second thread belongs. In other words, in this application, a thread may be used as a granularity to adjust a priority of using the level 3 cache, which enables a thread with a relatively high level 3 cache miss rate and relatively high load to preferentially access the level 3 cache, thereby reducing the level 3 cache miss rate of the thread.

For example, in the video play scenario, the top-app group includes a thread 1, a thread 2, and a thread 3, and the system group includes a thread 4 and a thread 5. The electronic device determines, based on load of threads, that the thread 1 and the thread 5 are first threads. A level 3 cache miss rate of the thread 1 is greater than the threshold 3, and a level 3 cache miss rate of the thread 5 is greater than the threshold 3. Therefore, the electronic device adjusts priorities of using the level 3 cache by the thread 1 and the thread 5, so that a priority of using the level 3 cache by the thread 1 is higher than priorities of using the level 3 cache by the thread 2 and the thread 3, and a priority of using the level 3 cache by the thread 5 is higher than a priority of using the level 3 cache by the thread 4. However, priorities of using the level 3 cache by the thread 4 and the thread 5 are still lower than priorities of using the level 3 cache by the thread 1, the thread 2, and the thread 3. In this way, when the thread 1, the thread 2, and the thread 3 simultaneously initiate an access request to the level 3 cache, the thread 1 may access the level 3 cache in preference to the thread 2 and thread 3; when the thread 4 and the thread 5 simultaneously initiate an access request to the level 3 cache, the thread 5 may access the level 3 cache in preference to the thread 4; and when the thread 2/the thread 3 and the thread 5 simultaneously initiate an access request to the level 3 cache, the thread 2/the thread 3 may access the level 3 cache in preference to the thread 5.

In this case, the electronic device may write the mapm configuration information, the running frequency of the level 3 cache, the priority of using the level 3 cache by each cgroup, and an adjusted priority of the second thread into the register, to manage the level 3 cache. As a result, a thread with relatively high load and a relatively low level 3 cache hit rate may preferentially access the level 3 cache, to reduce load pressure.

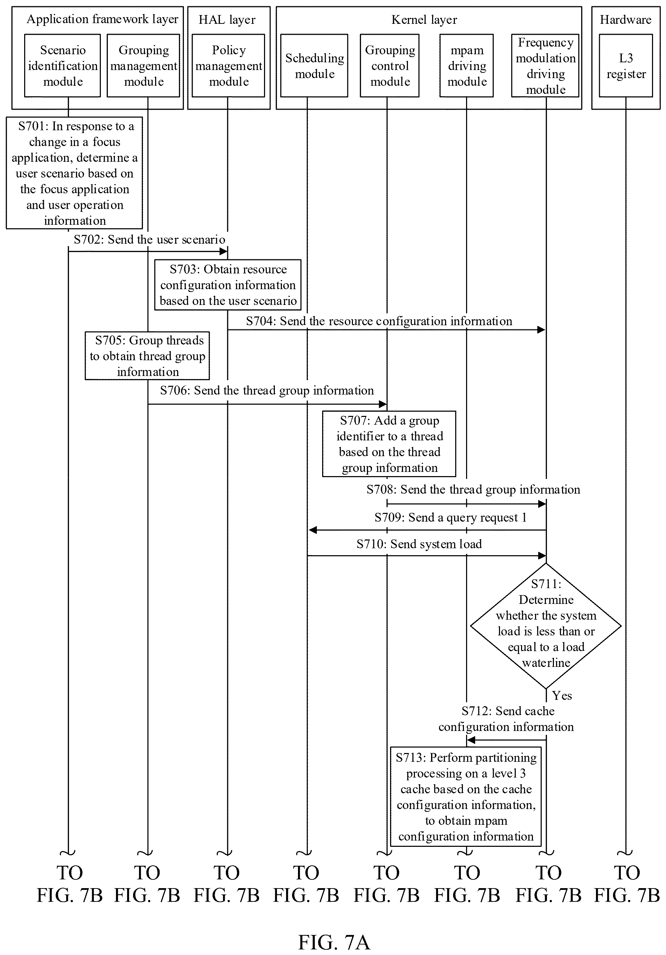

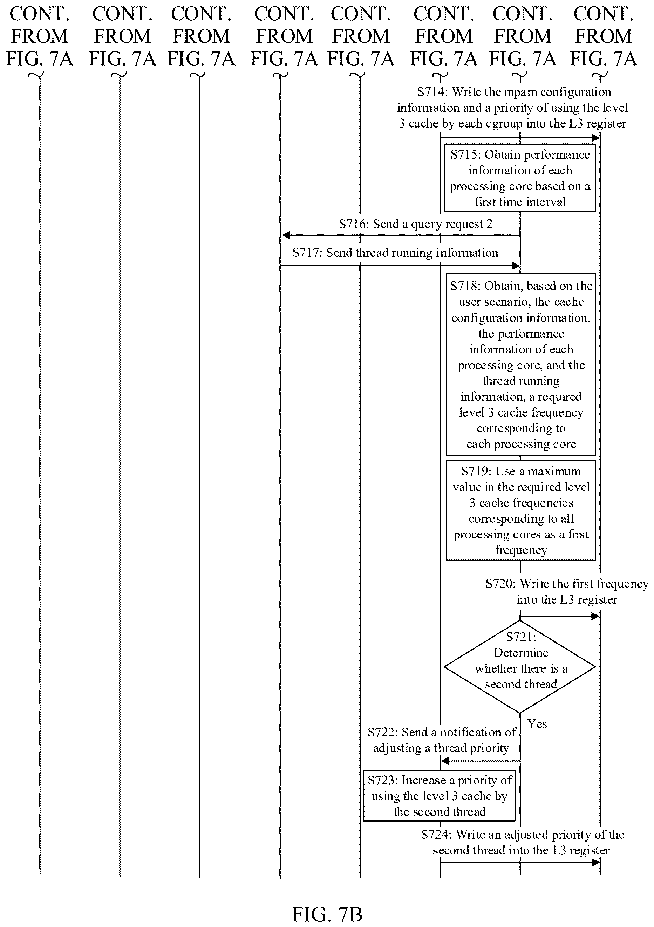

The following further describes, with reference to the software structure shown in FIG. 3, the shared cache management method provided in this application. FIG. 7A and FIG. 7B are a second schematic flowchart of a shared cache management method according to an embodiment of this application. The method may be applied to an electronic device with the software structure shown in FIG. 3. As shown in FIG. 7A and FIG. 7B, the shared cache management method includes S701~S724.

S701: In response to a change in a focus application, the scenario identification module determines a user scenario based on the focus application and user operation information.

For explanation of the user scenario, the focus application, and the user operation information, refer to related descriptions in S401. Details are not described herein again.

In a possible design, the scenario identification module may register monitoring with a process manager, and when the focus application changes, the process manager may send a notification to the scenario identification module, where the notification carries a current focus application.

Optionally, the scenario identification module may further register monitoring with an input (input) module to obtain a type of user operation and an object on the user operation is performed. The scenario identification module may further collect statistics on types and a quantity of operations performed by a user on the current focus application in a period of time, to obtain the user operation information.

S702: The scenario identification module sends the user scenario to the policy management module.

S703: The policy management module obtains resource configuration information based on the user scenario.

In this embodiment of this application, the resource configuration information includes a load waterline and cache configuration information. The load waterline may be used as a parameter for the electronic device to determine whether the cache configuration information is valid. The cache configuration information includes a space proportion of each cgroup in a level 3 cache, a priority of using the level 3 cache by each cgroup, and an upper limit value and a lower limit value of a frequency of the level 3 cache.

For a process of determining the resource configuration information, refer to Table 2 and related descriptions. Details are not described herein again.

S704: The policy management module sends the resource configuration information to the frequency modulation driving module.

For description of the resource configuration information, refer to S703. Details are not described herein again.

S705: The grouping management module groups threads to obtain thread group information.

The grouping management module may divide, based on whether applications to which the threads belong are foreground applications or background applications, the threads into a top-app (top-level application) group, a foreground (foreground) group, a system (system) group, and a background (background) group, to obtain the thread group information. For a specific process, refer to related descriptions in S402. Details are not described herein again.

S706: The grouping management module sends the thread group information to the grouping control module.

S707: The grouping control module adds a group identifier to a thread based on the thread group information.

In other words, the grouping control module may add a group identifier to a thread in the thread group information, to determine a cgroup to which the thread belongs. It should be noted that different cgroups have different group identifiers. For example, group identifiers of the top-app group, the foreground group, the system group, and the background group are respectively 1, 2, 3, and 4. In this case, the electronic device may set group identifiers of all threads in the top-app group to 1, set group identifiers of all threads in the foreground group to 2, set group identifiers of all threads in the system group to 3, and set group identifiers of all threads in the background group to 4.

S708: The grouping control module sends the thread group information to the frequency modulation driving module.

It should be noted that there is no strict execution sequence between S701~S704 and S705~S708. S701~S704 may be performed before S705~S708, or S705~S708 may be performed before S701~S704, or S701~S704 and S705~S708 are performed in parallel. This is not specifically limited herein.

S709: The frequency modulation driving module sends a query request 1 to the scheduling module.

In an optional implementation, the frequency modulation driving module may send the query request 1 to the scheduling module through a function call.

S710: The scheduling module sends system load to the frequency modulation driving module.

In this embodiment of this application, the scheduling module obtains the system load in response to receiving the query request 1, and sends the obtained system load to the frequency modulation driving module. Optionally, the scheduling module may send the system load to the frequency modulation driving module through a function callback.

S711: The frequency modulation driving module determines whether the system load is less than or equal to the load waterline.

When the system load is less than or equal to the load waterline, the frequency modulation driving module performs S712. When the system load is greater than the load waterline, the level 3 cache is managed based on resource configuration information in a default scenario.

S712: The frequency modulation driving module sends the cache configuration information to the MPAM driving module.

For description of the cache configuration information, refer to S707 respectively. Details are not described herein again.

S713: The MPAM driving module performs partitioning processing on the level 3 cache based on the cache configuration information, to obtain MPAM configuration information.

S714: The MPAM driving module writes the MPAM configuration information and the priority of using the level 3 cache by each cgroup into an L3 register.

The L3 register is a register used to set parameter information related to the level 3 cache. A processor may read the MPAM configuration information and the priority of using the level 3 cache by each cgroup from the L3 register, and process an I/O request of each thread for the level 3 cache based on the MPAM configuration information and the priority of using the level 3 cache by each cgroup. For example, when a plurality of threads simultaneously initiate an access request to the level 3 cache, the processor preferentially controls a thread that belongs to a cgroup with a higher priority of using the level 3 cache to assess the level 3 cache, and only a cache partition corresponding to the cgroup to which the thread belongs can be assessed.

S715: The frequency modulation driving module obtains performance information of each processing core based on a first time interval.

For specific descriptions of a process in which the frequency modulation driving module obtains the performance information of each processing core and the performance information of each processing core, refer to S407. Details are not described herein again.

S716: The frequency modulation driving module sends a query request 2 to the scheduling module.

The query request 2 carries the thread group information.

In an optional implementation, the frequency modulation driving module may send the query request 2 to the scheduling module through a function call.

S717: The scheduling module sends thread running information to the frequency modulation driving module.

In this embodiment of this application, the scheduling module may obtain the thread running information in response to receiving the query request 2, and send the thread running information to the frequency modulation driving module. Optionally, the scheduling module may send the thread running information to the frequency modulation driving module through a function callback.

In this embodiment of this application, the thread running information includes running time proportions of a key thread group and a non-key thread group on each processing core, a quantity of times that a first thread misses the level 3 cache in second time, and a quantity of instructions running by the first thread in the second time. The first thread may be a thread with load ranking in top M, for example, a thread with load ranking in top 10.

The frequency modulation driving module may obtain, through calculation, a level 3 cache miss rate of the first thread in the level 3 cache based on the quantity of times that the first thread misses the level 3 cache in the second time, and the quantity of instructions running by the first thread in the second time.

S718: The frequency modulation driving module obtains, based on the user scenario, the cache configuration information, the performance information of each processing core, and the thread running information, a required level 3 cache frequency corresponding to each processing core.

For a process in which the frequency modulation driving module obtains the required level 3 cache frequency corresponding to each processing core, refer to S410. Details are not described herein again.

S719: The frequency modulation driving module uses a maximum value in the required level 3 cache frequencies corresponding to all processing cores as a first frequency.

S720: The frequency modulation driving module writes the first frequency into the L3 register.

It may be understood that, the frequency modulation driving module writes a running frequency of the level 3 cache into the L3 register, so that the level 3 cache can exchange data with a CPU based on the running frequency. Because the running frequency of the level 3 cache is determined based on a current user scenario, the performance information of each processing core, and the thread running information, the running frequency of the level 3 cache may match a running frequency of one or more processing cores and adapt to the current user scenario and a thread grouping situation, so that the one or more processing cores can obtain data or an instruction from the level 3 cache in a timely manner, thereby reducing impact caused to a running speed of a processing core due to a mismatch between the frequency of the level 3 cache and a running frequency of the processing core, increasing the running speed of the processing core, and further increasing a response speed of an application and improving user experience.

S721: The frequency modulation driving module determines whether there is a second thread.

The second thread is a first thread whose level 3 cache miss rate is greater than a threshold 3.

If there is the second thread, S722 is performed; or if there is no second thread, the procedure ends.

S722: The frequency modulation driving module sends, to the MPAM driving module, a notification of adjusting a thread priority.

The notification of adjusting the thread priority carries a name or an identifier of the second thread.

S723: The MPAM driving module increases a priority of using the level 3 cache by the second thread.

Increasing the priority of using the level 3 cache by the second thread may be understood as enabling the priority of using the level 3 cache by the second thread to be higher than a priority of using the level 3 cache by all other threads in a cgroup to which the second thread belongs. In other words, in this application, a thread may be used as a granularity to adjust a priority of using the level 3 cache, which enables a thread with a relatively high level 3 cache miss rate and relatively high load to preferentially access the level 3 cache, thereby reducing the level 3 cache miss rate of the thread.

S724: The MPAM driving module writes an adjusted priority of the second thread into the L3 register.

It may be understood that, after the MPAM driving module writes updated priority information into the L3 register, the processor may read the MPAM configuration information, the priority of using the level 3 cache by each cgroup, and the adjusted priority of the second thread from the L3 register, and process the I/O request of each thread for the level 3 cache based on the MPAM configuration information, the priority of using the level 3 cache by each cgroup, and the adjusted priority of the second thread. In this way, it can be ensured that a cgroup to which a thread (for example, a thread of the focus application) with a higher correlation degree with user interaction experience has sufficient cache space, and that a thread with relatively high load and a relatively low level 3 cache hit rate can preferentially access the level 3 cache. As a result, an application to which the thread with a higher correlation degree with the user interaction experience belongs has a large response speed, and user experience is improved.

An embodiment of this application further provides a chip system. The chip system includes at least one processor and at least one interface circuit. The processor and the interface circuit may be interconnected by using a line. For example, the interface circuit may be configured to receive a signal from another apparatus (for example, a storage of an electronic device). For another example, the interface circuit may be configured to send a signal to another apparatus (for example, the processor). For example, the interface circuit may read instructions stored in the storage and send the instructions to the processor. When the instructions are executed by the processor, the electronic device may be enabled to perform the steps in the foregoing embodiments. Certainly, the chip system may further include another discrete device. This is not specifically limited in this embodiment of this application.

An embodiment further provides a computer-readable storage medium. The computer-readable storage medium stores computer instructions. When the computer instructions are run on an electronic device, the electronic device is enabled to perform the functions or steps in the foregoing method embodiments.

An embodiment of this application further provides a computer program product. When the computer program product runs on an electronic device, the electronic device is enabled to perform the functions or steps in the foregoing method embodiments.

In addition, an embodiment of this application further provides an apparatus. The apparatus may be specifically a chip, a component, or a module. The apparatus may include a processor and a storage that are connected to each other. The storage is configured to store computer-executable instructions. When the apparatus runs, the processor may execute the computer-executable instructions stored in the storage, so that the chip performs the functions or steps performed by the electronic device in the foregoing method embodiments.

The electronic device, the computer-readable storage medium, the computer program product, or the chip provided in the embodiments may be configured to perform the corresponding method provided above. Therefore, for beneficial effects that can be achieved by the electronic device, the computer-readable storage medium, the computer program product, or the chip, refer to the beneficial effects in the corresponding method provided above. Details are not described herein again.

Through the descriptions of the foregoing implementations, a person skilled in the art may clearly understand that for the purpose of convenient and brief description, only division into the foregoing functional modules is used as an example for description. In actual application, the functions may be allocated to and completed by different functional modules based on a requirement. In other words, an internal structure of the apparatus is divided into different functional modules, to complete all or some of the functions described above.

In the several embodiments provided in this application, it should be understood that the disclosed apparatus and method may be implemented in another manner. For example, the described apparatus embodiment is merely an example. For example, division into the modules or units is merely logical function division. In actual implementation, there may be another division manner. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may be one or more physical units, that is, may be located in one place, or may be distributed in a plurality of different places. Some or all of the units may be selected based on actual requirements to achieve the objectives of the solutions in the embodiments.

In addition, the functional units in the embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions in the embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods in the embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

Finally, it should be noted that the foregoing embodiments are merely intended to describe the technical solutions in this application, but are not intended to limit this application. Although this application is described in detail with reference to example embodiments, a person of ordinary skill in the art should understand that modification or equivalent replacement may be made to the technical solutions in this application without departing from the spirit and scope of the technical solutions in this application.

**Claims**

1. A shared cache management method, applied to an electronic device, wherein the electronic device comprises a processor, the processor comprises a shared cache and N processing cores, N is an integer greater than or equal to 1, and the method comprises:

   receiving a first event used to trigger a focus application to change; and
   setting, in response to the first event, a running frequency of the shared cache to a first frequency based on the focus application, user operation information, performance information of each processing core, and thread running information, wherein
   the focus application is an application last operated by a user, the user operation information comprises types and a quantity of operations performed by the user on the focus application in preset time, the performance information of each processing core is used to reflect a shared cache miss rate of the processing core, the thread running information is used to reflect running time proportions of a plurality of thread groups on each of the N processing cores, and each thread group comprises one or more threads running on the electronic device.

2. The method according to claim 1, wherein before the setting a running frequency of the shared cache to a first frequency based on the focus application, user operation information, performance information of each processing core, and thread running information, the method further comprises:

determining a user scenario based on the focus application and the user operation information; and
determining resource configuration information based on the user scenario, wherein the resource configuration information comprises space proportions of the plurality of thread groups in the shared cache; and
the setting a running frequency of the shared cache to a first frequency based on the focus application, user operation information, performance information of each processing core, and thread running information comprises:
setting the running frequency of the shared cache to the first frequency based on the user scenario, the resource configuration information, the performance information of each processing core, and the thread running information.

3. The method according to claim 2, wherein the setting the running frequency of the shared cache to the first frequency based on the user scenario, the resource configuration information, the performance information of each processing core, and the thread running information comprises:

obtaining, for the $i^{th}$ processing core in the N processing cores, a running frequency of the $i^{th}$ processing core based on the user scenario, the resource configuration information, performance information of the $i^{th}$ processing core, and running time proportions respectively of the plurality of thread groups on the $i^{th}$ processing core, wherein i=1~N;
respectively obtaining, by querying first configuration information based on running frequencies of the N processing cores, required shared cache frequencies corresponding to the N processing cores, wherein a required shared cache frequency corresponding to the $i^{th}$ processing core is positively correlated with the running frequency of the $i^{th}$ processing core;
using a maximum value in the required shared cache frequencies corresponding to the N processing cores as the first frequency; and
setting the running frequency of the shared cache to the first frequency.

4. The method according to claim 3, wherein the performance information of the $i^{th}$ processing core further comprises a clock cycle of the $i^{th}$ processing core, the plurality of thread groups comprise a first control group and a second control group, a correlation degree between a thread comprised in the first control group and user interaction experience is greater than a correlation degree between a thread comprised in the second control group and the user interaction experience, and there is no intersection set between the thread comprised in the first control group and the thread comprised in the second control group; and
the running frequency of the $i^{th}$ processing core is positively correlated with the clock cycle of the $i^{th}$ processing core, a space proportion of the first control group in the shared cache, and a running time proportion of the first control group on the $i^{th}$ processing core, and the running frequency of the $i^{th}$ processing core is negatively correlated with a space proportion of the second control group in the shared cache and a running time proportion of the second control group on the $i^{th}$ processing core.

5. The method according to claim 4, wherein the running frequency of the $i^{th}$ processing core is further positively correlated with a shared cache miss rate of the $i^{th}$ processing core.

6. The method according to claim 4 or 5, wherein when the user scenario is a first user scenario, the running frequency of the $i^{th}$ processing core, the clock cycle of the $i^{th}$ processing core, the space proportion of the first control group in the shared cache, the space proportion of the second control group in the shared cache, the running time proportion of the first control group on the $i^{th}$ processing core, and the running time proportion of the second control group on the $i^{th}$ processing core meet the following:

$$Fcpu[i]=(cycle\_count[i]/sample\_ms)*Function1(P1,P2,Pt,x[i],y[i])$$

$$Function1(P1,P2,Pt,x[i],y[i])=C1*(1+P1/Pt)*(1+x[i])*(1-P2/Pt)*(1-y[i])$$

wherein Fcpu[i] is the running frequency of the $i^{th}$ processing core, cycle_count[i] is the clock cycle of the $i^{th}$ processing core, sample_ms is a time interval for the electronic device to obtain performance information of the N processing cores, P1 is the space proportion of the first control group in the shared cache, P2 is the space proportion of the second control group in the shared cache, Pt is a sum of P1 and P2, x[i] is the running time proportion of the first control group on the $i^{th}$ processing core, y[i] is the running time proportion of the second control group on the $i^{th}$ processing core, and C1 is a preset first constant.

7.  The method according to claim 4 or 5, wherein when the user scenario is a second user scenario, the running frequency of the $i^{th}$ processing core, the clock cycle of the $i^{th}$ processing core, the space proportion of the first control group in the shared cache, the space proportion of the second control group in the shared cache, the running time proportion of the first control group on the $i^{th}$ processing core, and the running time proportion of the second control group on the $i^{th}$ processing core meet the following:

$$Fcpu[i]=(cycle\_count[i]/sample\_ms)*Function2(P1,P2,Pt,x[i],y[i])$$

Function2(P1,P2,Pt,x[i],y[i])=C2*(1+P1/Pt)*(1+x[i])*(1+(ipm_meas[i]-ipm_ceil)/ipm_mea s[i])*(1-P2/Pt)*(1-y[i]) wherein Fcpu[i] is the running frequency of the $i^{th}$ processing core, cycle_count[i] is the clock cycle of the $i^{th}$ processing core, sample_ms is a time interval for the electronic device to obtain performance information of the N processing cores, P1 is the space proportion of the first control group in the shared cache, P2 is the space proportion of the second control group in the shared cache, Pt is a sum of P1 and P2, x[i] is the running time proportion of the first control group on the $i^{th}$ processing core, y[i] is the running time proportion of the second control group on the $i^{th}$ processing core, ipm_meas[i] is the shared cache miss rate of the $i^{th}$ processing core, ipm_ceil is a preset miss rate waterline value, and C2 is a preset second constant.

8.  The method according to any one of claims 4-7, wherein the user scenario comprises the first user scenario and the second user scenario; and

    when the user scenario is the first user scenario, the space proportion of the first control group in the shared cache is a first space proportion, and the space proportion of the second control group in the shared cache is a second space proportion; or
    when the user scenario is the second user scenario, the space proportion of the first control group in the shared cache is a third space proportion, and the space proportion of the second control group in the shared cache is a fourth space proportion, wherein
    the first space proportion is less than the third space proportion, and the second space proportion is greater than the fourth space proportion.

9.  The method according to any one of claims 2-8, wherein the method further comprises:
    in response to the first event, configuring cache partitions respectively of the plurality of thread groups in the shared cache based on the space proportions of the plurality of thread groups in the shared cache.

10. The method according to any one of claims 2-9, wherein the resource configuration information further comprises a priority of using the shared cache by each of the plurality of thread groups, and the method further comprises:
    configuring the plurality of thread groups based on the priority of using the shared cache by each thread group.

11. The method according to claim 10, wherein the thread running information further comprises a shared cache miss rate of a first thread, the first thread is a thread with load ranking in top M, M is a positive integer, and the method further comprises:
    adjusting a priority of a second thread in the first thread, so that the priority of the second thread is higher than a priority of another thread, different from the second thread, in a thread group to which the second thread belongs, wherein the second thread is a thread whose shared cache miss rate is greater than a first threshold in the first thread.

12. The method according to any one of claims 3-11, wherein the obtaining, for the $i^{th}$ processing core in the N processing cores, a running frequency of the $i^{th}$ processing core based on the user scenario, the resource configuration information, performance information of the $i^{th}$ processing core, and running time proportions respectively of the plurality of thread groups on the $i^{th}$ processing core comprises:

    for the $i^{th}$ processing core in the N processing cores, if the shared cache miss rate of the $i^{th}$ processing core is less than or equal to a miss rate waterline value, obtaining the running frequency of the $i^{th}$ processing core based on the user scenario, the resource configuration information, the performance information of the $i^{th}$ processing core, and the running time proportions respectively of the plurality of thread groups on the $i^{th}$ processing core; or

if the shared cache miss rate of the $i^{th}$ processing core is greater than the miss rate waterline value, determining the running frequency of the $i^{th}$ processing core based on a rated running frequency of the $i^{th}$ processing core.

13. The method according to any one of claims 2-11, wherein the resource configuration information further comprises a load waterline, and the method further comprises:

   obtaining system load; and

   the setting, in response to the first event, a running frequency of the shared cache to a first frequency based on the focus application, user operation information, performance information of each processing core, and thread running information comprises:

   in response to the first event and the system load being less than or equal to the load waterline, configuring the cache partitions respectively of the plurality of thread groups in the shared cache, and setting the running frequency of the shared cache to the first frequency based on the focus application, the user operation information, the performance information of each processing core, and the thread running information.

14. The method according to claim 13, wherein the load waterline comprises a first load waterline and a second load waterline, the first load waterline is a load waterline used when the user scenario is the first user scenario, the second load waterline is a load waterline used when the user scenario is the second user scenario, and the first load waterline is less than the second load waterline.

15. An electronic device, wherein the electronic device comprises a storage and a processor, the processor comprises a shared cache and N processing cores, and N is an integer greater than or equal to 1;

   the processor is coupled to the storage, wherein the storage is configured to store a computer program code, and the computer program code comprises computer instructions; and

   when the computer instructions are executed by the processor, the electronic device is enabled to perform the method according to any one of claims 1-14.

16. A computer-readable storage medium, comprising computer instructions, wherein when the computer instructions are run on an electronic device, the electronic device is enabled to perform the method according to any one of claims 1-14.

CPU 10

| Processing core 1 | Processing core 2 | Processing core 3 |
|---|---|---|
| Level 1 cache | Level 1 cache | Level 1 cache |
| Level 2 cache | Level 2 cache | Level 2 cache |

Level 3 cache

FIG. 1

Wireless communication module
BT/WLAN/GNSS/NFC/IR/FM
[150]

Processor
[110]

Display [160]

External storage
interface [120]

Internal storage
[121]

USB interface [130]

Charging
management
module
[140]

Power management
module [141]

Charging
input

Battery [142]

FIG. 2

Application layer

| Videos | Navigation | Music | News | Shopping |

Application framework layer

Scenario identification module

Grouping management module

Hardware abstraction layer

Policy management module

Kernel layer

Scheduling module

Grouping control module

mpam driving module

Frequency modulation driving module

FIG. 3

An electronic device determines a user scenario based on a focus application and user operation information — S401

The electronic device groups threads to obtain thread group information — S402

The electronic device obtains resource configuration information based on the user scenario — S403

The electronic device obtains system load — S404

The electronic device determines whether the system load is less than or equal to a load waterline — S405

Yes

The electronic device performs partitioning processing on a level 3 cache based on cache configuration information, to obtain mpam configuration information — S406

The electronic device obtains performance information of each processing core based on a first time interval — S407

The electronic device obtains thread running information — S408

The electronic device obtains, based on the user scenario, the cache configuration information, the performance information of each processing core, and the thread running information, a required level 3 cache frequency corresponding to each processing core — S409

The electronic device uses a maximum value in the required level 3 cache frequencies corresponding to all processing cores as a first frequency — S410

The electronic device manages the level 3 cache based on the mapm configuration information and the first frequency — S411

FIG. 4

```
                              ┌─────────────┐
                              │      /      │
                              └─────────────┘
```

| top-app (top-level application) | foreground (foreground) | system (system) | background (background) |

FIG. 5

top-app (top-level application), foreground (foreground)

system (system)

Cache partition:

| way0 | way1 | way2 | way3 | way4 | way5 | way6 | way7 | way8 | way9 |

background (background)

FIG. 6

FIG. 7A

CONT. CONT. CONT. CONT. CONT. CONT. CONT. CONT.
FROM FROM FROM FROM FROM FROM FROM FROM
FIG. 7A FIG. 7A FIG. 7A FIG. 7A FIG. 7A FIG. 7A FIG. 7A FIG. 7A

S714: Write the mpam configuration
information and a priority of using the level
3 cache by each cgroup into the L3 register

S715: Obtain performance
information of each
processing core based on a
first time interval

S716: Send a query request 2

S717: Send thread running information

S718: Obtain, based on the
user scenario, the cache
configuration information,
the performance
information of each
processing core, and the
thread running
information, a required
level 3 cache frequency
corresponding to
each processing core

S719: Use a maximum
value in the required level
3 cache frequencies
corresponding to all
processing cores as a first
frequency

S720: Write the first frequency
into the L3 register

S721:
Determine
whether there is a
second thread

Yes

S722: Send a notification of
adjusting a thread priority

S723: Increase a priority of
using the level 3 cache by
the second thread

S724: Write an adjusted priority of the
second thread into the L3 register

FIG. 7B

## INTERNATIONAL SEARCH REPORT

| International application No. |
|---|
| **PCT/CN2024/112910** |

**A. CLASSIFICATION OF SUBJECT MATTER**

G06F12/084(2016.01)i

According to International Patent Classification (IPC) or to both national classification and IPC

**B. FIELDS SEARCHED**

Minimum documentation searched (classification system followed by classification symbols)

IPC:G06F12/-

Documentation searched other than minimum documentation to the extent that such documents are included in the fields searched

Electronic data base consulted during the international search (name of data base and, where practicable, search terms used)

CNTXT, ENTXTC, CNABS, CJFD, CNKI: 共享, 缓存, 管理, 多核, 焦点, 应用, 最后, 最新, 操作, 使用, 用户, 操作信息, 处理核, 性能, 缺失率, 线程, 分组, 占比, 运行, 频点, 频率; DWPI, ENTXT, VEN, WPABS, IEEE: share?, cache, manage+, Multi-core, focus, application, APP, last, operat+, user, information, process+, core, performance, deletion rate, thread, group, run time, fraction, frequency, bin

**C. DOCUMENTS CONSIDERED TO BE RELEVANT**

| Category* | Citation of document, with indication, where appropriate, of the relevant passages | Relevant to claim No. |
|---|---|---|
| A | CN 103077128 A (HUAZHONG UNIVERSITY OF SCIENCE AND TECHNOLOGY) 01 May 2013 (2013-05-01) description, paragraphs [0010]-[0046] | 1-16 |
| A | CN 101739298 A (INTERNATIONAL BUSINESS MACHINES CORP.) 16 June 2010 (2010-06-16) entire document | 1-16 |
| A | CN 114647296 A (INTEL CORP.) 21 June 2022 (2022-06-21) entire document | 1-16 |
| A | WO 2023165543 A1 (HUAWEI TECHNOLOGIES CO., LTD.) 07 September 2023 (2023-09-07) entire document | 1-16 |
| A | US 2017052891 A1 (ELECTRONICS AND TELECOMMUNICATIONS RESEARCH INSTITUTE) 23 February 2017 (2017-02-23) entire document | 1-16 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **27 October 2024** | **29 October 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**EP 4 742 047 A1**

**INTERNATIONAL SEARCH REPORT**
**Information on patent family members**

International application No.

**PCT/CN2024/112910**

| Patent document cited in search report | | | Publication date (day/month/year) | Patent family member(s) | | | Publication date (day/month/year) |
|---|---|---|---|---|---|---|---|
| CN | 103077128 | A | 01 May 2013 | CN | 103077128 | B | 23 September 2015 |
| CN | 101739298 | A | 16 June 2010 | US | 2010138571 | A1 | 03 June 2010 |
| | | | | US | 8131894 | B2 | 06 March 2012 |
| | | | | CN | 101739298 | B | 31 July 2013 |
| CN | 114647296 | A | 21 June 2022 | DE | 102021126686 | A1 | 23 June 2022 |
| | | | | US | 2022197519 | A1 | 23 June 2022 |
| WO | 2023165543 | A1 | 07 September 2023 | CN | 116756057 | A | 15 September 2023 |
| US | 2017052891 | A1 | 23 February 2017 | KR | 20170023280 | A | 03 March 2017 |

Form PCT/ISA/210 (patent family annex) (July 2022)

**EP 4 742 047 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311399261